# EUROPÄISCHE PATENTSCHRIFT

(11) **EP 1 051 577 B1**
(45) Veröffentlichungstag und Bekanntmachung des Hinweises auf die Patenterteilung: **13.02.2002**
(21) Anmeldenummer: 98966358.8
(22) Anmeldetag: 17.12.1998
(51) Int. Cl.: F16H 61/36

(54) **SCHALTVORRICHTUNG FÜR EIN ZAHNRÄDERWECHSELGETRIEBE**
SHIFTING DEVICE FOR A MANUAL GEAR TRANSMISSION
SYSTEME DE CHANGEMENT DE VITESSES POUR BOITE DE VITESSES A ENGRENAGES

(30) Priorität: 30.01.1998 DE 19803593
(43) Veröffentlichungstag der Anmeldung: 15.11.2000
(73) Patentinhaber: DaimlerChrysler AG, 70567 Stuttgart (DE)
(72) Erfinder: DUCKECK, Friedrich, D-72760 Reutlingen (DE); WÖRNER, Günter, D-71394 Kernen (DE)
(86) Internationale Anmeldenummer: EP9808289
(87) Internationale Veröffentlichungsnummer: WO9939117

(56) Entgegenhaltungen:
- DE-U- 1 498 498
- FR-A- 2 214 921

## Beschreibung

Die Erfindung bezieht sich auf eine Schaltvorrichtung nach dem Oberbegriff von Patentanspruch 1.
Bei einer bekannten Schaltvorrichtung der eingangs genannten Art (DE 14 98 498 U1) ist der Handschalthebel in einer radialen Lagerkonsole am oberen Ende eines an der Lenksäule eines Kraftfahrzeuges drehbar gelagerten Schaltrohres schwenkbar gelagert und mit seinem in das Schaltrohr hineinragenden Hebelende an ein im Schaltrohr verlegtes flexibles Stellgestänge angekoppelt, welches zu einer im Wechselgetriebe angeordneten Wählplatte führt, welche zwischen zwei Wählendstellungen parallel zur Schaltwelle verschiebbar geführt ist. Jeder dieser beiden Wählendstellungen ist eine Schaltgasse mit zwei Fahrgängen im Schaltbild des Handschalthebels zugeordnet, wobei die Wählplatte durch Schwenken des Handschalthebels um eine zur Drehachse des Schaltrohres senkrechte Schwenkachse der Lagerkonsole in ihre jeweilige Wählendstellung betätigt wird.
Das Schaltrohr ist bei dieser bekannten Schaltvorrichtung an seinem unteren Ende mit einem mehrteiligen Fernschaltgestänge kinematisch verbunden, das zum Wechselgetriebe führt und dort mit der drehbar gelagerten Schaltwelle kinematisch verbunden ist, welche mittels eines zu ihr bewegungsfesten Schaltnockens direkt oder mittelbar eine Zahnradkupplung zum Ein- oder Ausrücken eines der ausgewählten Schaltgasse zugehörigen Fahrganges betätigt, wenn der Handschalthebel um die Drehachse des Schaltrohres geschwenkt wird und dadurch das Schaltrohr sowie mit letzterem zwangsläufig auch die Schaltwelle zu einer Drehbewegung veranlaßt.

Bei dieser bekannten Schaltvorrichtung ist die Präzision der Gangschaltung durch die Aufspaltung in eine Schaltwelle und in eine Wählplatte am getriebeseitigen Eingang der Schaltvorrichtung nicht immer gewährleistet, wobei diese Aufspaltung auch zu Schwierigkeiten hinsichtlich der Unterdrückung von Schwingungen führen kann, welche vom Antriebsmotor angeregt werden. Auch werden in Fahrzeuglängsrichtung auftretende Relativbewegungen zwischen der in Fahrzeuglängsrichtung vorn liegenden Motor-Getriebe-Einheit und dem Fahrzeugaufbau, an welchem der hinter dem Getriebe angeordnete Handschalthebel gehaltert ist, ungefiltert auf den Handschalthebel übertragen, was beim Anlassen des Antriebsmotores zu Schwingbewegungen führen kann.

Aus der DE 93 08 072.2 U1 ist ein gattungsfremdes Schalthebelgehäuse für mechanische Getriebe von Kraftfahrzeugen bekannt, bei dem eine zur Anbringung an Karosserieteilen bestimmte Befestigungseinrichtung, eine der Übertragung von Schaltbewegungen dienende Betätigungsstange und eine Stützstange sowie ein mit der Betätigungsstange in Wirkverbindung stehender Handschalthebel vorgesehen sind.
Um ein Schalthebelgehäuse dieser Art zu entwerfen, dessen Lagerung an der Karosserie oder sonstigen Fahrzeuggestellteilen mit Hinblick auf eine einfache Dämpfung bzw. Entkoppelung von Schwingbewegungen eines zugehörigen Getriebes hin ausgelegt ist, soll bei diesem bekannten Schalthebelgehäuse ein Gehäusekörper, an dem die Stützstange befestigt ist, vorgesehen sein, in dem die Betätigungsstange in Richtung ihrer Achse verschiebbar und um ihre Achse schwenkbar gelagert ist und an dem der Handschalthebel gelagert ist, wobei die Befestigungseinrichtung durch eine Montageplatte gebildet ist, die mit dem Gehäusekörper unter Zwischenanordnung wenigstens eines Federelementes in Verbindung steht.

Aus der EP 0 448 526 A1 ist eine weitere gattungsfremde Fernschaltvorrichtung zur Verbindung eines Handschalthebels mit einem Gangwechselgetriebe eines Kraftfahrzeuges bekannt, bei welcher ein erster Aktuator zum Auswählen der Gänge und ein zweiter Aktuator zum Schalten der Gänge jeweils innerhalb des Getriebes angeordnet sind, wobei zur Vermeidung der - bei Verwendung einer sowohl die Wähl- als auch die Schaltbewegungen übertragenden Fernschaltstange einhergehenden - Übermittlung von Schwingungen und Geräuschen der Aktuator zum Wählen durch ein in sich starres Schaltgestänge und der Aktuator zum Schalten durch ein flexibles Schaltgestänge jeweils mit dem Handschalthebel gekoppelt sind.

Aus der EP 0 699 853 A1 ist schließlich noch eine gattungsfremde Betätigungseinrichtung zum Steuern des Gangwechsels eines Getriebes eines Kraftfahrzeuges bekannt, die vom Getriebe räumlich getrennt ist und bei der die Schalt- und Wählbewegungen über zwei Schaltstangen oder zwei Schaltzüge zum Getriebe übertragen werden, und bei der ein Schalthebel zum Auswählen der Schaltgassen und Schalten der Gänge, eine Rückführeinrichtung für den Schalthebel in eine bestimmte Neutralposition und mindestens eine Widerstandseinrichtung zur Beeinflussung der Betätigungskraft beim Wählen der Schaltgassen vorgesehen sind. Damit der Fahrer beim Schalten der Gänge in den Schaltgassen eine haptische Rückmeldung des Vollzugs des Gangwechsels bekommt, ist bei dieser bekannten Betätigungseinrichtung eine Arretiervorrichtung zur Sicherung der Schalthebelpositionen in den Schaltgassen verwendet.

Die der Erfindung zugrunde liegende Aufgabe wird im wesentlichen darin gesehen, bei einer Schaltvorrichtung der eingangs genannten Art unter Präzisierung des Schaltungsablaufes das Auftreten von Schwingungen, d.h. niederfrequente Bewegungen und Körperschall, möglichst zu verhindern.

Die erläuterte Aufgabe ist gemäß der Erfindung mit den kennzeichnenden Merkmalen von Patentanspruch 1 in vorteilhafter Weise gelöst.

Bei der Schaltvorrichtung nach der Erfindung sind zwischen dem Wechselgetriebe und der Lagerung des Handschalthebels drei Verbindungselemente verwendet, und zwar eine Fernschaltstange zwischen Schaltwelle und Handschalthebel als ein erstes Verbindungselement, ein flexibles Wählstellgestänge zwischen Schaltwelle und Handschalthebel als ein zweites Verbindungselement sowie ein Koppelgestänge zwischen der Lagerung des Handschalthebels und dem Getriebegehäuse des Wechselgetriebes als ein drittes Verbindungselement, so daß sowohl niederfrequente Motorschwingungen abgekoppelt sind als auch die Übertragung hochfrequenter Schwingungen auf die Lagerung des Handschalthebels unterbunden ist.
Bei der Schaltvorrichtung nach der Erfindung werden die beim Anlassen des Antriebsmotors auftretenden Motorschwingungen nicht in Schalt- oder Wählbewegungen des Handschalthebels umgesetzt, weil letzterer an der mit dem Antriebsmotor verbundenen Koppelstange gelagert ist, die gegenüber dem Fahrzeugaufbau in Fahrzeuglängsrichtung begrenzt beweglich abstützbar ist.
Bei der Schaltvorrichtung nach der Erfindung können für die Verbindungen der Fernschaltstange und des Koppelgestänges mit dem Wechselgetriebe bzw. mit dem Getriebegehäuse in vorteilhafter Weise sphärische Gelenke verwendet werden, weil die Wählfunktion über das zusätzliche Verbindungselement Wählstellgestänge zum Wechselgetriebe übertragen wird, welches mit der zentralen Schaltwelle verbunden ist.
Bei der Schaltvorrichtung nach der Erfindung kann das Koppelgestänge so gegenüber dem festen Aufbauteil abgestützt sein, daß in Fahrzeugquerrichtung auftretende Reaktionskräfte sich nicht auf den Handschalthebel auswirken können.

Vorstehend erläuterte sowie weitere vorteilhafte Ausgestaltungen der Schaltvorrichtung nach der Erfindung sind Gegenstand der Unteransprüche.

Die Erfindung ist nachstehend anhand von drei in der Zeichnung schematisch dargestellten Ausführungsformen näher beschrieben. In der Zeichnung bedeuten
- Fig. 1: eine Schaltvorrichtung nach der Erfindung in der ersten Ausführungsform in perspektivischer Darstellung,
- Fig. 2: einen Teil-Schnitt durch die Schaltvorrichtung von Figur 1 nach Linie II -II,
- Fig. 3: eine Schaltvorrichtung nach der Erfindung in einer zweiten Ausführungsform in einer Seitenansicht,
- Fig. 4: die Schaltvorrichtung von Figur 3 in einer Draufsicht, und
- Fig. 5: eine Schaltvorrichtung nach der Erfindung in einer dritten Ausführungsform in einer Seitenansicht.

Die drei Ausführungsformen der Schaltvorrichtung nach der Erfindung stimmen in folgenden Merkmalen - für die jeweils die gleichen Bezugszahlen verwendet sind - überein:

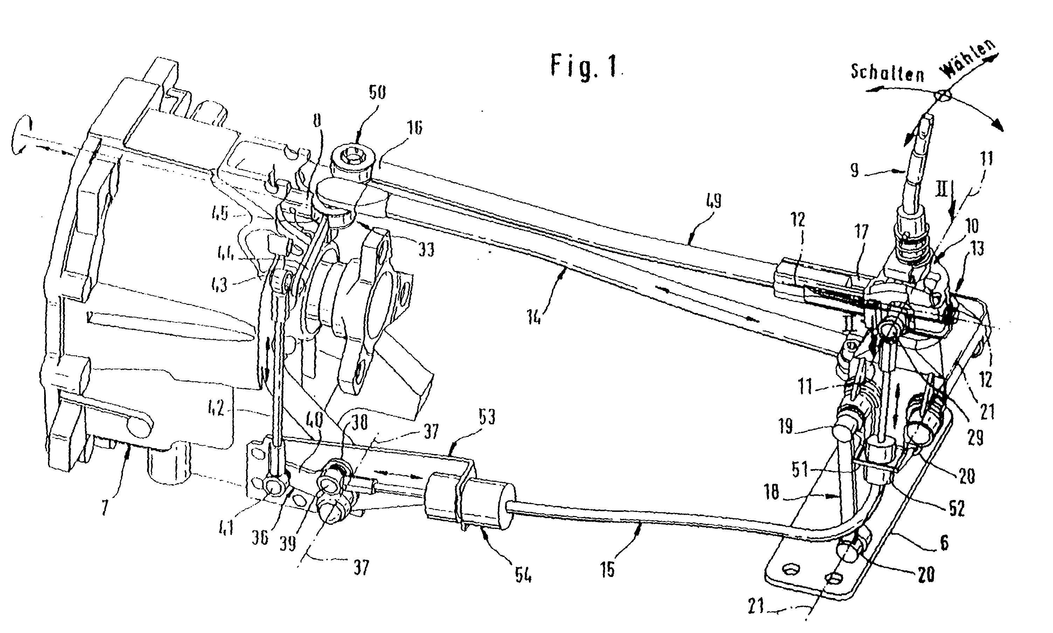

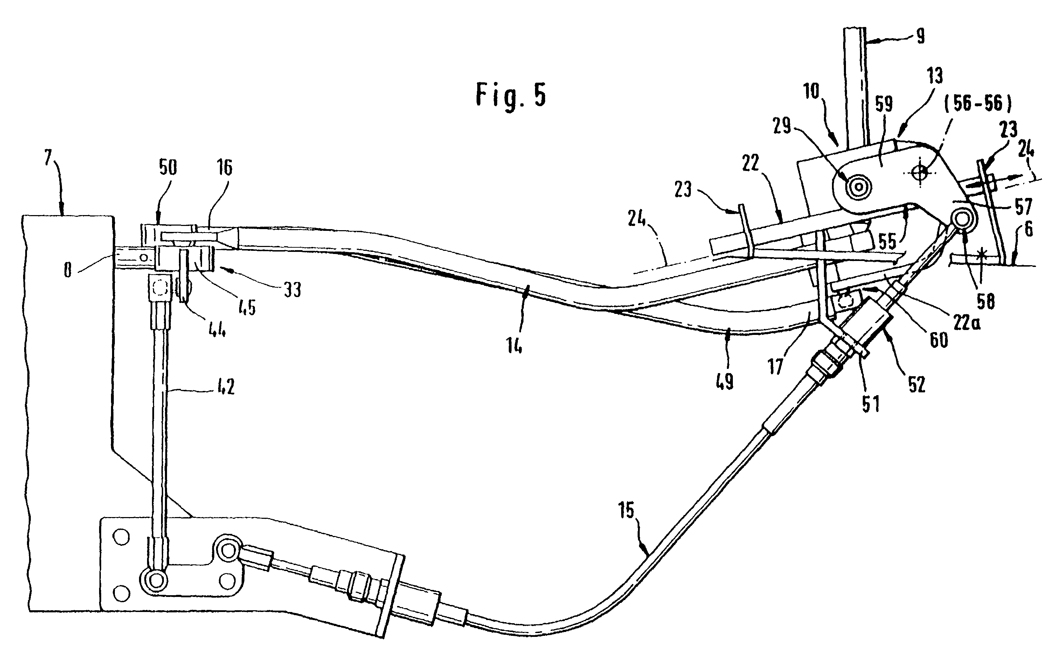

Gegenüber einem festen Aufbauteil 6 eines nicht näher dargestellten Fahrzeugaufbaues eines Kraftfahrzeuges sind sowohl ein Getriebegehäuse 7 eines Zahnräder-Wechselgetriebes als auch eine Lageranordnung 10 für die schwenkbare Lagerung eines Handschalthebels 9 jeweils begrenzt elastisch und begrenzt beweglich abgestützt. Wesentlicher Bestandteil der Lageranordnung 10 ist ein Kugelgelenk 46, dessen Gelenkkugel 47 bewegungsfest zum Handschalthebel 9 und dessen die Gelenkkugel 47 gleitend und drehbeweglich halternde Kugelpfanne 48 bewegungsfest zu einer Halte-Einrichtung 13 angeordnet sind. Das Kugelgelenk 46 und eine nicht mehr dargestellte Kulissenführung vermitteln eine Schwenkbeweglichkeit des Handschalthebels um zwei zueinander senkrechte Schwenkachsen 11-11 und 12-12 für die Schalt- und Wählbewegungen des Handschalthebels 9.
Das Kugelgelenk 46 unterteilt den Handschalthebel 9 in einen den Schaltgriff aufweisenden oberen Hebelteil und in einen unteren, durch ein einachsiges Gelenk 34 - dessen Gelenkachse 35-35 parallel zur Schwenkachse 11-11 für die Schaltbewegungen des Handschalthebels 9 ausgerichtet ist - mit einer Fernschaltstange 14 verbundenen Hebelteil. Die Fernschaltstange 14 führt zu einer im Getriebegehäuse 7 drehbar und axial verschiebbar gelagerten Schaltwelle 8 mit einem das Gehäuse nach außen durchsetzenden Wellenende, mit dem die Fernschaltstange 14 durch ein sphärisches Gelenk 33 verbunden ist.
Die Halte-Einrichtung 13 ist mit dem hinteren Gestängeende 17 eines Koppelgestänges 49 verbunden, dessen vorderes Gestängeende 16 durch ein sphärisches Gelenk 50 mit dem Getriebegehäuse 7 verbunden ist.
Ein zum Handschalthebel 9 bewegungsfester Hebelarm 30 und ein zur Schaltwelle 8 bewegungsfester Hebelarm 44 sind durch ein flexibles Wählstellgestänge 15 kinematisch miteinander gekoppelt. Die Mittelachse 32-32 des Hebelarmes 30 - welche durch das Gelenkzentrum 31 des Kugelgelenkes 46 gelegt ist - fällt im Idealfalle mit der Schwenkachse 11-11 des Handschalthebels 9 zusammen; bei den Ausführungsformen der Zeichnung hat sich aufgrund von Einbaubedingungen ein geringfügiger Neigungswinkel zwischen diesen beiden Achsen ergeben, welcher durch die Flexibilität des Wählstellgestänges 15 jedoch ohne Einfluß auf die Schaltwelle 8 bleibt.
Das Wählstellgestänge 15 ist an seinem dem Handschalthebel 9 zugeordneten Gestängeende in einer Führungsbuchse 52 geführt, welche durch einen Halter 51 an der Halte-Einrichtung 13 befestigt ist. Das Wählstellgestänge 15 ist an seinem der Schaltwelle 8 zugeordneten Gestängeende in einer Führungsbuchse 54 geführt, welche durch einen Halter 53 am Getriebegehäuse 7 befestigt ist.
An dem Halter 53 des Getriebegehäuses 7 ist noch ein zweiarmiger Winkelhebel 36 um eine quer zur Fahrzeuglängsrichtung liegende Schwenkachse 37-37 schwenkbar angeordnet, an dessen einem Hebelarm 38 das der Schaltwelle 8 zugeordnete Gestängeende des Wählstellgestänges 15 durch ein sphärisches Gelenk 39 angelenkt ist. Der andere Hebelarm 40 des Winkelhebels 36 ist durch ein sphärisches Gelenk 41 mit einer Lenkerstange 42 verbunden, welche ihrerseits durch ein sphärisches Gelenk 43 mit dem Hebelarm 44 verbunden ist, wobei sowohl letzterer als auch die Schaltwelle 8 jeweils bewegungsfest zu der Kugelpfanne 45 des Gelenkes 33 angeordnet sind.
Bei den beiden Ausführungsformen der Figuren 1/2 und 3/4 ist das dem Handschalthebel 9 zugeordnete Gestängeende des Wählstellgestänges 15 unmittelbar durch ein sphärisches Gelenk 29 mit dem Hebelarm 30 verbunden.
Bei der dritten Ausführungsform der Figur 5 ist an der Halte-Einrichtung 13 ein zweiarmiger Winkelhebel 55 um eine zur Schwenkachse 11-11 des Handschalthebels 9 parallele Schwenkachse 56-56 schwenkbar angeordnet, dessen einer Hebelarm 57 durch ein sphärisches Gelenk 58 mit dem dem Handschalthebel 9 zugeordneten Gestängeende des Wählstellgestänges 15 verbunden ist. Der andere Hebelarm 59 des Winkelhebels 55 ist durch das sphärische Gelenk 29 des Hebelarmes 30 mit dem Handschalthebel 9 verbunden.

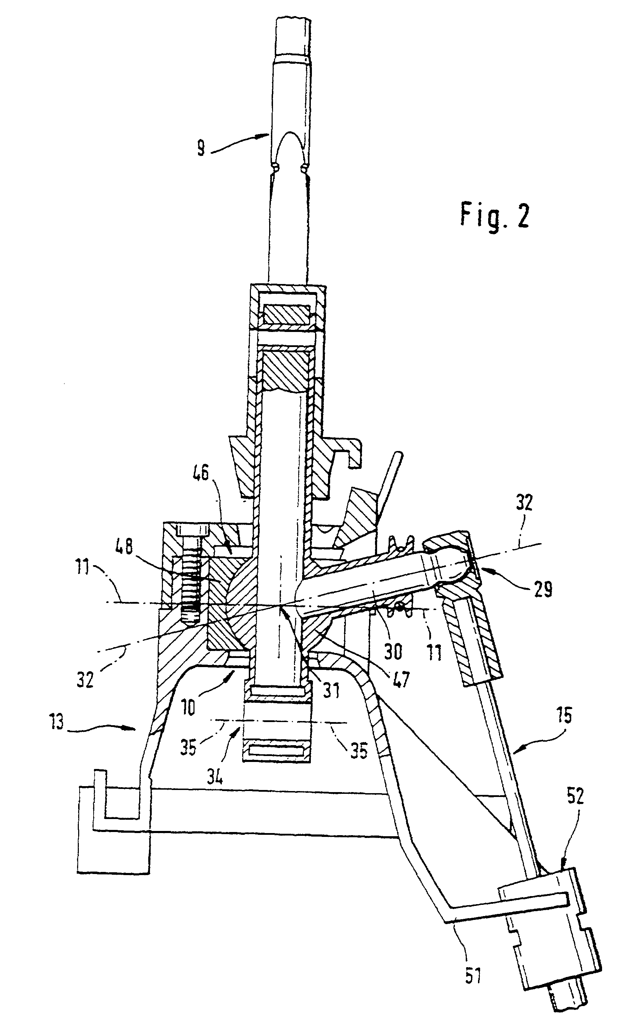

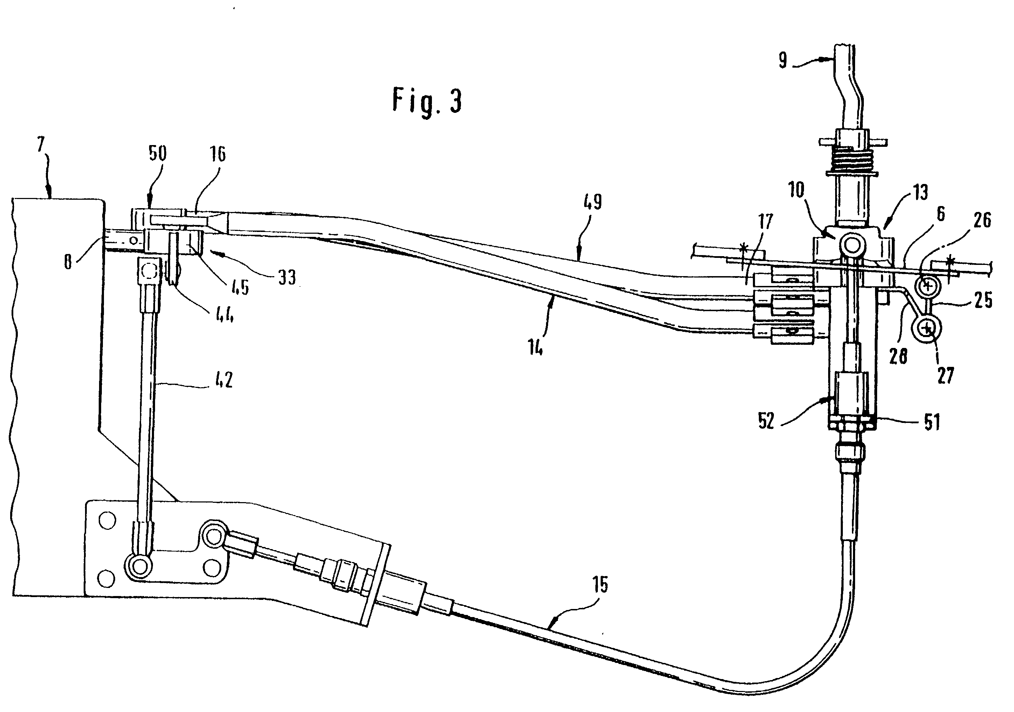

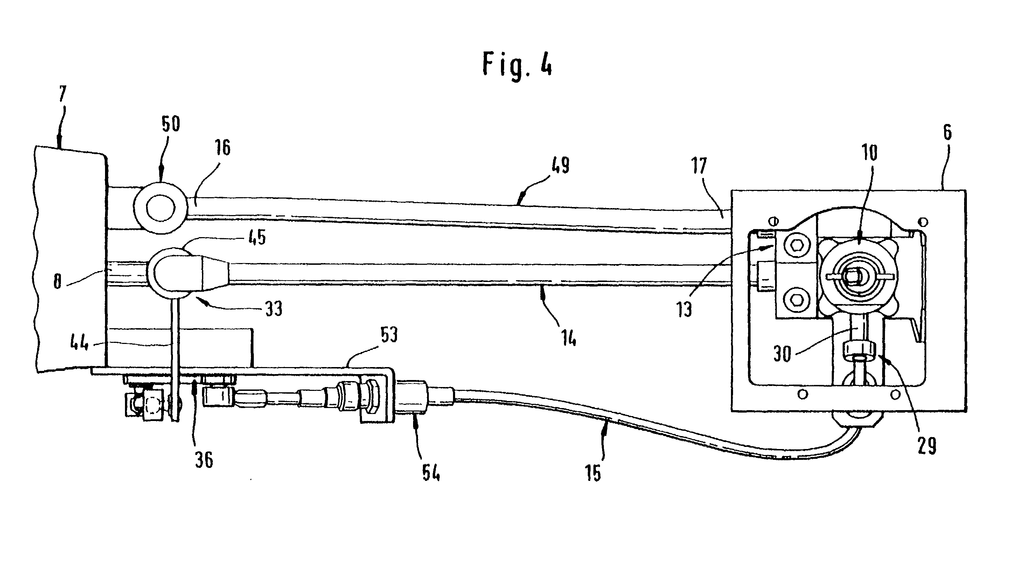

Bei der ersten Ausführungsform der Figuren 1/2 sind die Halte-Einrichtung 13 mit dem hinteren Gestängeende 17 der Koppelsstange 49 durch zwei Pendel-Stützen 18 - welche etwa symmetrisch zu einer die Schwenkachse 12-12 des Handschalthebels 9 enthaltenden vertikalen Ebene der Halte-Einrichtung 13 liegen - um eine zur Schwenkachse 11-11 des Handschalthebels 9 parallele Schwenkachse 21-21 des festen Aufbauteiles 6 gegenüber dem Fahrzeugaufbau begrenzt schwenkbar gelagert. Die Pendel-Stützen 18 sind jeweils durch ein Gelenk 19 mit der Halte-Einrichtung 13 und durch ein Gelenk 20 mit dem Aufbauteil 6 verbunden. Durch diese Anordnung ist das Koppelgestänge 49 im wesentlichen starr in Fahrzeugquerrichtung gegenüber dem Fahrzeugaufbau ausgebildet. Weiterhin ist durch diese Anordnung der Bauraum hinter der Lageranordnung 10 des Handschalthebels 9 nicht durch die Schaltvorrichtung eingeengt. Ein weiterer Vorteil dieser Anordnung besteht darin, daß für das Gelenk zur Verbindung des Koppelgestänges 49 mit dem Getriebegehäuse 7 ein sphärisches Gelenk 50 verwendet werden kann.
Bei der zweiten Ausführungsform der Figuren 3/4 sind die Halte-Einrichtung 13 mit dem hinteren Gestängeende 17 der Koppelstange 49 mit einem nach hinten weisenden starren Fortsatz 28 versehen, welcher durch eine Pendel-Schwinge 25 um eine quer zur Fahrzeuglängsrichtung liegende Schwenkachse 26-26 begrenzt schwingend gegenüber dem festen Fahrzeugteil 6 aufgehängt ist. Die Pendel-Schwinge 25 ist als Scharnier ausgebildet und mit dem Fortsatz 28 um eine zur Schwenkachse 26-26 parallele Scharnierachse 27 schwenkbeweglich verbunden.

Bei der Ausführungsform der Figur 5 ist die Halte-Einrichtung 13 mit einem Schlitten 22 versehen, welcher in einer zum fahrzeugfesten Aufbauteil 6 bewegungsfest angeordneten Schlittenführung 23 begrenzt verschiebbar geführt ist. Die Schlittenführung 23 ist in einer Führungsebene 24-24 des Aufbauteiles 6 angeordnet, welche in Fahrzeuglängsrichtung nach vorn geneigt sowie etwa parallel zur Schwenkachse 11-11 des Handschalthebels 9 ausgerichtet ist.

Bei allen drei Ausführungsformen vermag die Koppelstange 49 und somit auch die Lageranordnung 10 mit dem Handschalthebel 9 aufgrund der jeweiligen Ausgestaltung ihrer Abstützung gegenüber dem Aufbauteil 6 in Fahrzeuglängsrichtung begrenzte Ausgleichsbewegungen durchführen, so daß sich Relativbewegungen zwischen Antriebsmotor und Fahrzeugaufbau nicht auf den Handschalthebel in Form unerwünschter Ein- oder Ausrückbewegungen auswirken können.

## Patentansprüche

1. Schaltvorrichtung für ein Zahnräder-Wechselgetriebe
- mit einem festen Aufbauteil (6) eines Fahrzeugaufbaues
- mit einem Getriebegehäuse (7) des Wechselgetriebes
- - mit einer Schaltwelle (8)
- - - mit einem Freiheitsgrad gegenüber dem Getriebegehäuse (7) zum Betätigen von Zahnradkupplungen
- - mit einem Wählglied
- - - mit einem Freiheitsgrad gegenüber dem Getriebegehäuse (7) zum Auswählen einer Zahnradkupplung für deren Betätigung durch die Schaltwelle (8)
- - mit einer elastischen Abstützung gegenüber dem Aufbauteil (6)
- mit einem Handschalthebel (9)
- - mit einer Lageranordnung (10) zur schwenkbaren Lagerung um zwei zueinander senkrechte Schwenkachsen (11-11 u. 12-12)
- - - mit einer Halte-Einrichtung (13) zur Halterung der Lageranordnung (10) gegenüber dem festen Aufbauteil (6)
- mit einem Fernschaltgestänge (14), welches den Handschalthebel (9) mit der Schaltwelle (8) kinematisch so verbindet, daß die Schwenkbewegungen um die eine Schwenkachse (11-11) zwangsläufig zu Bewegungen der Schaltwelle (8)in deren Freiheitsgrad zum Betätigen von Zahnradkupplungen führen
- mit einem flexiblen Stellgestänge (15) zur Übertragung von Zug- und Druckkräften, welches den Handschalthebel (9) mit dem Wählglied kinematisch so verbindet, daß die Schwenkbewegungen um die andere Schwenkachse (12-12) zwangsläufig zu Bewegungen des Wählgliedes in dessen Freiheitsgrad zum Auswählen einer Zahnradkupplung führen,
**dadurch gekennzeichnet,**
**daß** die Halte-Einrichtung als Koppelgestänge (13) ausgebildet ist, welches an seinem in Fahrzeuglängsrichtung vorn liegenden einen Gestängeende (16) an das Getriebegehäuse (7) und an seinem in Fahrzeuglängsrichtung hinten liegenden anderen Gestängeende (17) an den festen Aufbauteil (6) in Fahrzeuglängsrichtung begrenzt beweglich angekoppelt ist, daß die Lageranordnung (10) an dem in Fahrzeuglängsrichtung hinten liegenden Gestängeende (17) des Koppelgestänges (13) vorgesehen ist, und daß die Schaltwelle (8) zusätzlich als Wählglied mit dem Freiheitsgrad zum Auswählen einer Zahnradkupplung ausgebildet und mit dem flexiblen Stellgestänge (15) gekoppelt ist.

2. Schaltvorrichtung nach Patentanspruch 1,
**dadurch gekennzeichnet,**
**daß** das hinten liegende Gestängeende (17) durch,wenigstens eine Pendel-Stütze (18) gegenüber dem Aufbauteil (6) um eine zur Fahrzeuglängsrichtung quer liegende Schwenkachse (21-21) schwenkbar abgestützt ist.

3. Schaltvorrichtung nach Patentanspruch 2,
**dadurch gekennzeichnet,**
**daß** die Anlenkpunkte (19 u. 20) der Pendel-Stütze (18) in der Ruhestellung in einer wenigstens annähernd aufrechten Querebene des Aufbauteiles (6) liegen.

4. Schaltvorrichtung nach Patentanspruch 1,
**dadurch gekennzeichnet,**
**daß** das hinten liegende Gestängeende (17) an einen Schlitten (22) angelenkt ist, welcher in einer Schlittenführung (23) des Aufbauteiles (6) in Fahrzeuglängsrichtung verschiebbar geführt ist.

5. Schaltvorrichtung nach Patentanspruch 4,
**dadurch gekennzeichnet,**
**daß** die Schlittenführung (23) in einer in Fahrzeuglängsrichtung nach vorn geneigten Führungsebene (24-24) des Aufbauteiles (6) liegt.

6. Schaltvorrichtung nach Patentanspruch 4,
**dadurch gekennzeichnet,**
**daß** der Schlitten (22) durch ein sphärisches Gelenk (60) mit dem hinteren Gestängeende (17) der Koppelstange (49) verbunden ist.

7. Schaltvorrichtung nach Patentanspruch 1,
**dadurch gekennzeichnet,**
**daß** das hinten liegende Gestängeende (17) durch eine Pendel-Schwinge (25) um eine quer zur Fahrzeuglängsrichtung liegende geometrische Achse (26) schwingend gegenüber dem Aufbauteil (6) aufgehängt ist.

8. Schaltvorrichtung nach Patentanspruch 7,
**dadurch gekennzeichnet,**
**daß** die Pendel-Schwinge (25) und ein mit der Pendel-Schwinge schwenkbar verbundener starrer Fortsatz (28) des Gestängeendes (17) in Form eines Scharnieres ausgebildet sind.

9. Schaltvorrichtung nach Patentanspruch 1,
**dadurch gekennzeichnet,**
**daß** das flexible Stellgestänge (15) mit einem festen Hebelarm (30) des Handschalthebels (9) durch ein Kugelgelenk (29) verbunden ist.

10. Schaltvorrichtung nach Patentanspruch 9,
**dadurch gekennzeichnet,**
**daß** die Lageranordnung (10) des Handschalthebels (9) als Kugelgelenk ausgebildet und die Mittelachse (32-32) des Hebelarmes (30) des Handschalthebels (9) durch das Gelenkzentrum (31) des Kugelgelenkes gelegt ist.

11. Schaltvorrichtung nach Patentanspruch 1,
**dadurch gekennzeichnet,**
**daß** das Fernschaltgestänge als eine die Schaltwelle (8) mit dem Handschalthebel (9) unmittelbar verbindende Fernschaltstange (14) ausgebildet ist.

12. Schaltvorrichtung nach Patentanspruch 11,
**dadurch gekennzeichnet,**
**daß** die Schaltwelle (8) durch ein Kugelgelenk (33) mit der Fernschaltstange (14) verbunden ist.

13. Schaltvorrichtung nach Patentanspruch 11 oder 12,
**dadurch gekennzeichnet,**
**daß** die Fernschaltstange (14) durch ein mit seiner Gelenkachse (35-35) quer zur Fahrzeuglängsrichtung liegendes einachsiges Gelenk (34) mit dem Handschalthebel (9) verbunden ist.

14. Schaltvorrichtung nach Patentanspruch 1,
**dadurch gekennzeichnet,**
**daß** das Stellgestänge (15) mit dem einen Hebelarm (38) eines zweiarmigen Winkelhebels (36) verbunden ist, der gegenüber dem Getriebegehäuse (7) um eine quer zur Fahrzeuglängsrichtung liegende Schwenkachse (37-37) schwenkbar gelagert ist, und daß der andere Hebelarm (40) des Winkelhebels (36) durch eine Lenkerstange (42) mit einem festen Hebelarm (44) der Schaltwelle (8) verbunden ist.

15. Schaltvorrichtung nach Patentanspruch 14,
**dadurch gekennzeichnet,**
**daß** der feste Hebelarm (44) der Schaltwelle (8) unmittelbar mit der Kugelpfanne (45) des die Schaltwelle (8) mit der Fernschaltstange (14) verbindenden Kugelgelenkes (33) verbunden ist.

## Claims

1. Shift mechanism for a change-speed gear
- with a fixed mounting component (6) of a motor vehicle body,
- with a gearbox housing (7) of the change-speed gear
- - with a main shaft (8)
- - - with a degree of clearance relative to the gearbox housing (7) for operating gear couplings
- - with a selection member
- - - with a degree of clearance relative to the gearbox housing (7) for selecting a gear coupling so that it can be operated by the main shaft (8)
- - elastically supported relative to the mounting component (6)
- with a manually operated shift lever (9)
- - with a bearing arrangement (10) to provide a pivotable mounting about two pivot axes (11-11 and 12-12) perpendicular to one another
- - - with a retaining device (13) for retaining the bearing arrangement (10) relative to the fixed mounting component (6)
- with a remote control linkage (14) which kinematically links the manually operated shift lever (9) with the main shaft (8) so that the pivoting motions about the one pivot axis (11-11) necessarily cause the main shaft (8) to be displaced in its clearance in order to operate gear couplings
- with a flexible adjusting rod linkage (15) for transmitting traction and compressive forces linking the manually operated shift lever (9) to the selection member so that the pivoting movements about the other pivot axis (12-12) necessarily cause the selection member to be displaced in its clearance in order to select a gear coupling,
**characterised in that**
the retaining system is designed as a coupling rod linkage (13) which is coupled with the gear box housing (7) by its rod end (16) lying to the front in the vehicle longitudinal direction and with the fixed mounting component (6) by its other end rod end (17) lying to the rear in the vehicle longitudinal direction such that it can be displaced to a limited degree, the bearing arrangement (10) being provided at the rod end (17) of the coupling rod linkage (13) lying go the rear in the vehicle longitudinal direction, and the main shaft (8) additionally being designed as a selection member with a degree of clearance to select a gear coupling and being coupled with the flexible adjusting rod linkage (15).

2. Shift mechanism as claimed in claim 1,
**characterised in that**
the rod end (17) lying to the rear is supported relative to the mounting component (6) by at least one pendulum support (18) so as to be pivotable about a pivot axis (21-21) lying transversely to the vehicle longitudinal direction.

3. Shift mechanism as claimed in claim 2,
**characterised in that**
in the non-operating position, the linkage points (19 and 20) of the pendulum support (18) lie in an at least approximately upright transverse plane of the mounting component (6).

4. Shift mechanism as claimed in claim 1,
**characterised in that**
the rod end (17) lying to the rear is articulated on a carriage (22) which is slidably guided in the vehicle longitudinal direction in a carriage guide (23) of the mounting component (6).

5. Shift mechanism as claimed in claim 4,
**characterised in that**
the carriage guide (23) lies in a guide plane (24-24) of the mounting component (6) which is forwardly inclined in the vehicle longitudinal direction.

6. Shift mechanism as claimed in claim 4,
**characterised in that**
the carriage (22) is connected to the rear rod end (17) of the coupling rod (49) by a spherical joint (60).

7. Shift mechanism as claimed in claim 1,
**characterised in that**
the rod end (17) lying to the rear is suspended by a pendulum swing (25) so as to swing relative to the mounting component (6) about a geometric axis (26) lying transversely to the vehicle longitudinal direction.

8. Shift mechanism as claimed in claim 7,
**characterised in that**
the pendulum swing (25) and a rigid continuation (28) of the rod end (17) pivotably joined to the pendulum swing are designed in the form of a hinge.

9. Shift mechanism as claimed in claim 1,
**characterised in that**
the flexible adjusting rod linkage (15) is connected to a rigid lever arm (30) of the manually operated shift lever (9) by a ball joint (29).

10. Shift mechanism as claimed in claim 9,
**characterised in that**
the bearing arrangement (10) of the manually operated shift lever (9) is a ball joint and the central axis (32-32) of the lever arm (30) of the manually operated shift lever (9) intersects the joint centre (31) of the ball joint.

11. Shift mechanism as claimed in claim 1,
**characterised in that**
the remote control linkage is a remote control linkage (14) directly linking the main shaft (8) with the manually operated shift lever (9).

12. Shift mechanism as claimed in claim 11,
**characterised in that**
the main shaft (8) is linked to the remote control linkage (14) by a ball joint (33).

13. Shift mechanism as claimed in claim 11 or 12,
**characterised in that**
the remote control linkage (14) is linked to the manually operated shift lever (9) by a single-axis joint (34) disposed with its articulation axis (35-35) lying transversely to the vehicle longitudinal direction.

14. Shift mechanism as claimed in claim 1,
**characterised in that**
the adjusting rod linkage (15) is connected to the one lever arm (38) of a dual-arm bell crank (36), which is mounted so as to be pivotable relative to the gearbox housing (7) about a pivot axis (37-37) lying transversely to the vehicle longitudinal direction and the other lever arm (40) of the bell crank (36) is connected to a fixed lever arm (44) of the main shaft (8) via a guide rod (42).

15. Shift mechanism as claimed in claim 14,
**characterised in that**
the fixed lever arm (44) of the main shaft (8) is directly connected to the ball socket (45) of the ball joint (33) connecting the main shaft (8) to the remote control rod linkage (14).

## Revendications

1. Système de changement de vitesses pour une boîte de vitesses à engrenages comportant :
- une partie fixe (6) d'une superstructure de véhicule,
- un carter (7) de boîte de vitesses comportant
- - un arbre de commande (8)
- - - avec un degré de liberté par rapport au carter (7) de la boîte de vitesses pour actionner des accouplements à engrenages,
- - un organe de sélection
- - - avec un degré de liberté par rapport au carter (7) de la boîte de vitesses pour sélectionner un accouplement à engrenages pour le faire actionner par l'arbre de commande (8),
- - un appui élastique par rapport à la partie de superstructure (6),
- un levier de changement de vitesses manuel (9) comportant
- - un agencement de palier (10) pour le montage pivotant autour de deux axes de pivotement (11-11 et 12-12) perpendiculaires l'un à l'autre,
- - - avec un dispositif de retenue (13) pour maintenir l'agencement de palier (10) par rapport à la partie fixe (6) de superstructure,
- une timonerie d'éloignement de changement de vitesses (14) qui relie par voie cinématique le levier de changement de vitesses manuel (9) à l'arbre de commande (8) de telle sorte que les mouvements de pivotement autour de l'un des axes de pivotement (11-11) mènent obligatoirement à des mouvements de l'arbre de commande (8) dans son degré de liberté pour actionner les accouplements à engrenages,
- une timonerie de réglage (15) flexible pour transmettre des forces de traction et de pression, qui relie le levier de changement de vitesses manuel (9) à l'organe de sélection avec une cinématique telle que les mouvements de pivotement autour de l'autre axe pivotant (12-12) mènent obligatoirement à des mouvements de l'organe de sélection dans le degré de liberté pour sélectionner un accouplement à engrenages,
**caractérisé en ce que**
le dispositif de retenue est réalisé sous forme de timonerie d'accouplement (13) qui est accouplée de manière mobile limitée en direction longitudinale du véhicule à une de ses extrémités (16) de la timonerie, située à l'avant en direction longitudinale du véhicule, sur le carter de boîte de vitesse (17) et à son autre extrémité (17) de la timonerie, située à l'arrière en direction longitudinale du véhicule, sur la partie fixe (6) de superstructure, **en ce que** l'agencement de palier (10) est prévu à l'extrémité (17) de la timonerie d'accouplement (13), qui est située à l'arrière en direction longitudinale du véhicule, et **en ce que** l'arbre de commande (8) est réalisé additionnellement sous forme d'organe de sélection avec le degré de liberté pour sélectionner un accouplement à engrenages et est accouplé à la timonerie de réglage (15) flexible.

2. Système de changement de vitesses selon la revendication 1,
**caractérisé en ce que** l'extrémité (17) de timonerie, située à l'arrière, est soutenue à pivotement par au moins un support oscillant par rapport à la partie (6) de superstructure autour d'un axe de pivotement (21-21) situé transversalement à la direction longitudinale du véhicule.

3. Système de changement de vitesses selon la revendication 2,
**caractérisé en ce que** les points d'articulation (19 et 20) du support oscillant (18) sont situés, dans la position de repos, dans un plan transversal au moins presque dressé de la partie (6) de superstructure.

4. Système de changement de vitesses selon la revendication 1,
**caractérisé en ce que** l'extrémité (17) de timonerie, située à l'arrière, est articulée sur un chariot (22) qui est guidé à déplacement dans la direction longitudinale du véhicule, dans un guidage de chariot (23) de la partie (6) de superstructure.

5. Système de changement de vitesses selon la revendication 4,
**caractérisé en ce que** le guidage de chariot (23) est situé dans un plan de guidage (24-24) de la partie de superstructure, qui est incliné vers l'avant en direction longitudinale du véhicule.

6. Système de changement de vitesses selon la revendication 4,
**caractérisé en ce que** le chariot (22) est relié par une articulation sphérique (60) à l'extrémité arrière (17) de la tringle d'accouplement (49).

7. Système de changement de vitesses selon la revendication 1,
**caractérisé en ce que** l'extrémité (17) de la timonerie, située à l'arrière, est suspendue de manière oscillante par rapport à la superstructure (6) par une bielle oscillante (25) autour d'un axe (26) géométrique situé transversalement à la direction longitudinale du véhicule.

8. Système de changement de vitesses selon la revendication 7,
**caractérisé en ce que** la bielle oscillante (25) et un prolongement (28) rigide de l'extrémité (17) de la timonerie, relié à pivotement avec la bielle oscillante (25), sont réalisés sous forme d'une charnière.

9. Système de changement de vitesses selon la revendication 1,
**caractérisé en ce que** la timonerie de réglage (15) flexible est reliée à un bras de levier fixe (30) du levier de changement de vitesses manuel (9) par un joint sphérique (29).

10. Système de changement de vitesses selon la revendication 9,
**caractérisé en ce que** l'agencement de palier (10) du levier manuel (9) est réalisé sous forme de joint sphérique et l'axe médian (32-32) du bras de levier (30) du levier manuel (9) est défini par le centre (31) du joint sphérique.

11. Système de changement de vitesses selon la revendication 1,
**caractérisé en ce que** la timonerie d'éloignement de changement de vitesses est réalisée sous forme de tringle d'éloignement (14) de changement de vitesses reliant directement l'arbre de commande (8) au levier manuel (9).

12. Système de changement de vitesses selon la revendication 11,
**caractérisé en ce que** l'arbre de commande (8) est relié par une articulation sphérique (33) à la tringle d'éloignement (14).

13. Système de changement de vitesses selon l'une ou l'autre des revendications 11 et 12, **caractérisé en ce que** la tringle d'éloignement (14) est reliée au levier manuel (9) par une articulation (34) monoaxiale, dont l'axe d'articulation (35-35) est situé transversalement à la direction longitudinale du véhicule.

14. Système de changement de vitesses selon la revendication 1,
**caractérisé en ce que** la timonerie de réglage (15) est reliée à un des bras (38) d'un levier angulaire (36) à deux bras, qui est monté à pivotement par rapport au boîtier de changement de vitesse (7) autour d'un axe de pivotement (37-37) situé transversalement à la direction longitudinale du véhicule, et **en ce que** l'autre bras de levier (40) du levier angulaire (36) est relié par une barre de liaison (42) à un bras de levier fixe (44) de l'arbre de commande (8).

15. Système de changement de vitesses selon la revendication 14,
**caractérisé en ce que** le bras de levier fixe (44) de l'arbre de commande (8) est relié directement au coussinet sphérique (45) de l'articulation sphérique (33) reliant l'arbre de commande (8) à la tringle d'éloignement (14).
